# EUROPEAN PATENT SPECIFICATION

(11) **EP 3 789 935 B1**
(45) Date of publication and mention of the grant of the patent: **18.03.2026**
(21) Application number: 20194128.3
(22) Date of filing: 02.09.2020
(51) Int. Cl.: G06Q 10/0633, G06Q 10/0631, G06Q 10/06, G06Q 10/00, G06Q 10/04, G06Q 10/063

(54) **AUTOMATED DATA PROCESSING BASED ON MACHINE LEARNING**
AUTOMATISIERTE DATENVERARBEITUNG AUF BASIS VON MASCHINENLERNEN
TRAITEMENT DE DONNÉES AUTOMATISÉ BASÉ SUR L'APPRENTISSAGE MACHINE

(30) Priority: 03.09.2019 US 201916558444
(43) Date of publication of application: 10.03.2021
(73) Proprietor: SAP SE, 69190 Walldorf (DE)
(72) Inventor: Lehr, Dennis, 69190 Walldorf (DE)
(74) Representative: Müller-Boré & Partner Patentanwälte PartG mbB

(56) References cited:
- WO-A2-2007/021790
- US-A1- 2019 156 244
- US-B1- 8 370 280

## Description

### TECHNICAL FIELD

The present disclosure relates to computer-implemented methods, software, and systems for automated data processing in a process management environment.

### BACKGROUND

Software application may execute processes in relation to providing user-requested services. Processes may be defined as workflows that include multiple steps taking input and providing output. A process may be implemented in different manner to represent a common scenario. For example, an approval process may be implemented in relation to different use cases. Example use cases may be a purchase requisition process, a leave request approval process, an expenditure approval process, etc. These use cases may be implemented to include multiple steps including one or more approval steps. An approval process may include different use case scenarios as well as different implementations for each of those use cases, depending on implementation and business requirements. WO 2007/021790 A2 describes a computer-implemented simulator which models the entire analytic value chain so that data generation, model fitting and strategy optimization are an integral part of the simulation. Data collection efforts, data mining algorithms, predictive modeling technologies and strategy development methodologies define the analytic value chain of a business operation: data → models - > strategies → profit. Inputs to the simulator include consumer data and potential actions to be taken regarding a consumer or account. The invention maps what is known about a consumer or an account and the potential actions that the business can take on that consumer or account to potential future financial performance. After iteratively performing simulations using varying inputs, modeling the effect of the innovation on a profit model, the simulator outputs a prediction of the commercial value of an analytic innovation.

### SUMMARY

The present disclosure involves systems, software, and computer implemented methods as defined in the claims for utilizing tools and techniques for providing data that can be used for prediction and automation of a process execution result. The method includes the following operations: mapping customer-specific data with generic framework data based on identification of one or more work items included in the customer-specific data and the generic framework data, wherein the generic framework data is generated for a generic workflow associated with a plurality of process scenarios provided by a plurality of services; based on the mapping, joining the customer-specific data with the generic framework data to generate an initial data set to be provided for predicting one or more predictable variable for a process scenario from the plurality of process scenarios associated with the generic workflow; defining one or more first features of the initial data set to correspond to independent variables for a machine learning prediction and one or more second features to correspond to the one or more predictable variables for the machine learning prediction; identifying input for performing the machine learning prediction for a process scenario execution, the input including the initial data set, an implementation of a machine learning algorithm, and data processing rules for data enhancement; performing data adjustment based on the data processing rules over the initial data set to generate an output data set; and providing the output data set for evaluation by the implementation of the machine learning algorithm of the process scenario execution.

Implementations can optionally include one or more of the following features. In some instances, workflow data for the generic workflow is received. The generic workflow is implemented in multiple process scenarios, and wherein the workflow data is generated during execution of instances of multiple process scenarios.

In some instances, based on the received workflow data, defining a generic framework to include data for features of the generic workflow and the one or more predictable variables of the generic workflow, wherein the features are determined based on the workflow data and comprise a feature to identify work items associated with an executed instance of the generic workflow.

In some instance, customer-specific data is received. The customer-specific data being stored in relation to executions of a first process scenario from the plurality of process scenarios, wherein the customer-specific data includes data for one or more work items identified in the data of the generic framework.

In some instances, performing the data adjustment over the initial data set comprises performing data cleaning on the initial data set, the data cleaning being based on an evaluation of the initial data set according to data cleaning rules included in the data processing rules to generate a clean data set.

In some instances, performing the data adjustment further comprises evaluating features from the clean data set according to a type of data stored for a feature from the features to generate the output data set to be provided for evaluation by the implementation of the machine learning algorithm, wherein the output data set includes a set of features defined based on evaluation and combination of the features from the clean data set according to data preparation rules for numerical and for categorical data.

In some instances, the data cleaning is performed based on evaluation of occurrences of values in store data in relation to a features from the one or more first features corresponding to the independent variables according to the data cleaning rules.

In some instances, the data processing rules for data enhancement comprise a rule associated with adjusting data entries for a feature from the one or more first features based on a maximum number of categories of data entries included in stored data for the feature.

In some instances, the method comprises executing the machine learning algorithm based on the implementation, the output data set, and input data associated with the process scenario execution, to generate a prediction value; storing the prediction value for the process scenario execution and an actual value for the process scenario execution, wherein the actual value is determined based on actual execution of the process scenario at a running service implementing a process scenario instance and associated with the input data used for generating the prediction value; and reevaluating the generic framework data based on an evaluation of stored prediction values and actual values, wherein reevaluating the generic framework data includes adjusting the features defined at the generic framework data.

Similar operations and processes may be performed in a system comprising at least one process and a memory communicatively coupled to the at least one processor where the memory stores instructions that when executed cause the at least one processor to perform the operations. Further, a non-transitory computer-readable medium storing instructions which, when executed, cause at least one processor to perform the operations may also be contemplated. In other words, while generally described as computer implemented software embodied on tangible, non-transitory media that processes and transforms the respective data, some or all of the aspects may be computer implemented methods or further included in respective systems or other devices for performing this described functionality. The details of these and other aspects and embodiments of the present disclosure are set forth in the accompanying drawings and the description below. Other features, objects, and advantages of the disclosure will be apparent from the description and drawings, and from the claims.

### DESCRIPTION OF DRAWINGS

FIG. 1 illustrates an example computer system architecture that can be used to execute implementations of the present disclosure.
FIG. 2 is a block diagram illustrating an example system for predicting a result from a process scenario in accordance with implementations of the present disclosure.
FIG. 3A and 3B are flowcharts for an example method for providing output data for evaluation by a machine learning service to generate a predicted process execution result in accordance with implementations of the present disclosure.
FIG. 4 is a schematic illustration of example computer systems that can be used to execute implementations of the present disclosure.

### DETAILED DESCRIPTION

The present disclosure describes various tools and techniques for providing data that can be used for prediction of a process execution result. The data may be used during execution of machine-learning logic by a machine-learning service to generate a prediction value for a process scenario execution result. The data provided to the machine-learning algorithm may be automatically enhanced to support an intelligent data model that can be deployed and provide reliable results with high accuracy rates. The prediction may be generated for a particular instance of a process execution, where input for running the instance is provided at a system environment where the process is running. For example, input to triggering a process instance in productive manner may be received through a user input. To provide prediction based on a machine-learning model deployed in a process execution context, data related to the prediction model is to be generated.

Multiple process scenarios may be associated with a generic workflow. The process scenarios may correspond to different use cases for implementing and executing the generic workflow. For example, an approval workflow may be interpreted as a generic workflow, where a leave request process may be a process scenario that is part of the generic workflow. In yet another example, a purchase requisition process is another example process scenario that may be also interpreted as part of the generic approval workflow. These process scenarios share common features and/or common execution steps, for example, approval steps. The process scenarios may be implemented at different productive systems where they run and provide services to users or other systems. The process scenarios may be implemented with different technologies and software/hardware requirement into application services running at software infrastructure. For example, cloud services implemented at a cloud platform infrastructure may be accessed via instantiated interfaces and received input to start a process execution instance.

During execution of instances of process scenarios related to a generic workflow, workflow data is generated. Such data may be stored as historic data at relevant systems, and may be collected and evaluated for use by a machine learning service to provide predictive services.

In some instance, the workflow data for a generic workflow is generated during execution of instances of multiple process scenarios related to the generic workflow at different systems and according to different process requirements. The workflow data may be related to different use cases of the generic workflow. Therefore, a generic framework may be defined to include features associated with the workflow data. The features of the generic framework data may be defined as variables with correspondingly stored data. The variables may be associated with dependent and independent data. For example, process execution results, such as a final result of an approval process - namely approved or not approved, is a dependent variable. The dependent variables may be evaluated in the context of the independent variables according to machine-learning logic to provide prediction for the dependent variables. Within a given generic framework, multiple dependent and multiple independent variables may be defined.

In some instances, a generic framework including data for features related to a generic workflow associated with multiple process scenarios may be defined. The generic framework data includes predictable variables of the generic workflow. In some implementations, these predictable variables are dependent variables that are identified in the workflow data.

To provide predictive services in relation to a process scenario related to a generic workflow, data related to multiple process scenarios, including the one that is to be predicted, may be utilized. Such data may be historic data from past executions of instances of these scenarios. When a process scenario instance is to be evaluated by machine-learning logic to determine a predicted result for a process scenario outcome, data related to the particular process scenario instance may also be taken into consideration. Such data may be related to the particular instance, e.g. input provided by a user or systems when triggering the process execution. Further, such data may include specific data related to a system environment and an operation environment where the process scenario instance is running. For example, such data may be customer-specific data related to data objects created in systems and applications related to the system where the process is executed. Such customer-specific data may be related to data objects or entities that are part of or related to steps from the process scenario execution.

For example, within the example of leave request approval process, the process may be executed through a corporate portal application, where data stored in relation to an employee profile can be stored. Such employee data may be store in a related human resource application or administrative database or system that is associated with the corporate portal application. The leave request approval process may be also associated with performance data stored for the employee. Therefore, data related to the approval process may be also related to data stored in other systems. For example, such data may be stored at another separate system, or in a related module of a platform providing multiple services in relation to employees. The customer-specific data may be related to the process execution and may not be stored as part of the workflow data for process execution and tracked in the historic data.

In some instance, the generic framework data and the customer-specific data are combined to provide enhanced data that can be used by machine-learning logic to provide prediction of results from a process execution results. For example, based on the combined framework and customer data, an outcome of a request for vacation executed through an implemented leave request service can be predicted. The enhanced data may be a result of combination of the data as well as adjustment of data to outline characteristics and properties of both the generic workflow and the customer specifics in relation to a particular use case of process executions. For example, the generic framework data and the customer-specific data may include common items, that can be used for mapping the two data sets.

In some implementations, an initial data set may be provided based on a mapping between customer-specific data and generic framework data. The initial data set may be adjusted to provide the output data. The adjustments to the data may be based on data enhancement techniques to provide output data that is better fitted to support predictive services in relation to a process scenario of a generic workflow that runs at a particular process execution infrastructure and according to customer process requirements. Data adjustment techniques may be implemented over the initial data set to provide the output data that may be evaluated by an implementation of a machine learning algorithm and a prediction value for the process execution may be generated.

In some implementations, the initial data set is generated by joining customer-specific data and the generic framework data. The generic framework data includes data for features of a generic workflow related to the process scenario execution that is to be predicted based on the output data. The generated initial data set is determined to include first features of the data associated with independent variables and second features of the data associated with predictable variables to be used by a machine learning prediction algorithm.

The initial data set may be adjusted according to predefined data processing rules for data enhancement. The initial data set is prepared for use by a machine-learning service that may take the output data that is generated according to the data processing rules, and execute machine-learning logic in relation to a particular execution of a process scenario that is to be predicted.

Applying machine learning techniques in the context of predicting process execution results may provide different benefits for system improvements in process environments. For example, based on predictive services, a decision support system for evaluating tasks, for automation of process execution or subset of tasks within a process, etc. may be provided. Such implementation of machine learning techniques may improve system performance as resource spending can be allocated more efficiently and at the same time may provide services in a timelier manner.

When a prediction model is created for process execution, relevant data and process requirements may be taken into consideration. A model that is generated for a particular use case may require a lot of manual interaction and configuration to correspond to a particular use case specifics. At the same time, such a model is specific to a use case and cannot be re-used for a more generic definition of a process that shares some of the characteristics of the use case, but has a different implementation, e.g. another scenario. Data that may be used for developing a prediction data model may be stored at a separate system that is not into direct communication with a customer business specific information. For example, data from a process execution engine, and data from a software application storing business customer-specific content may be required for performing process prediction. Therefore, data acquisition and preparation are required when building a prediction model.

In some implementations, intelligent data processing is provided in an automated manner and is integrated with customer-specific data for process prediction by implemented logic into a machine learning service. The machine learning service may be provided as part of the provided service for executing a process scenario, or a plurality of scenarios associated with a generic workflow.

In some instances, the machine learning service may be implemented as an independent service that takes input from external systems and data storages and executes a machine learning algorithm according to an inputted implementation and provided enhanced data to provide prediction services.

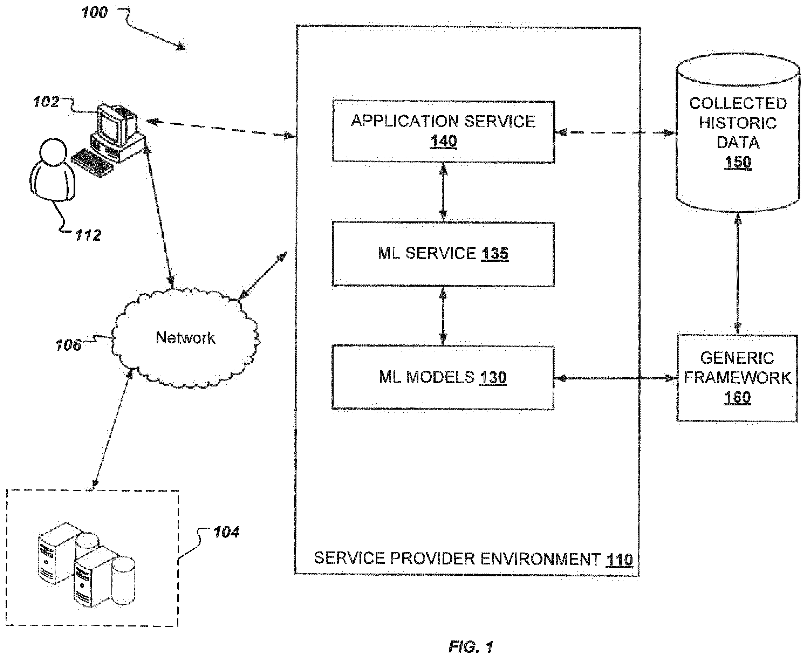

FIG. 1 illustrates an example computer system architecture 100 that can be used to execute implementations of the present disclosure. In the depicted example, the example computer system architecture 100 includes a client device 102, a network 106, and a host system 104, and a service provider environment 110. The host system 104 may include one or more server devices and databases, processors, memory. In the depicted example, a user 112 interacts with the client device 102.

**In** some instances, the service provider environment 110 is a hardware and software environment providing infrastructure and services that may run and provide user functionality. For example, different software applications including one or more services may be executed at the service provider environment 110. The service provider environment 110 is instantiated to support deployment and execution of applications and services. For example, the service provider environment 110 may be a cloud-based platform provided for hosting client applications that may consume platform provided services or other services deployed by different service providers.

In some examples, the client device 102 can communicate with the host system 104 over the network 106. In some examples, the client device 102 includes any appropriate type of computing device such as a desktop computer, a laptop computer, a handheld computer, a tablet computer, a personal digital assistant (PDA), a cellular telephone, a network appliance, a camera, a smart phone, an enhanced general packet radio service (EGPRS) mobile phone, a media player, a navigation device, an email device, a game console, or an appropriate combination of any two or more of these devices or other data processing devices. In some implementations, the network 106 can include a large computer network, such as a local area network (LAN), a wide area network (WAN), the Internet, a cellular network, a telephone network (e.g., PSTN) or an appropriate combination thereof connecting any number of communication devices, mobile computing devices, fixed computing devices and server systems.

In some implementations, the host system 104 includes at least one server and at least one data store. In the example of FIG. 1, the host system 104 is intended to represent various forms of servers including, but not limited to a web server, an application server, a proxy server, a network server, and/or a server pool. In general, server systems accept requests for application services and provides such services to any number of client devices (e.g., the client device 102 over the network 106).

In accordance with implementations of the present disclosure, and as noted above, the service provider environment 110 can host applications and services to provide requested functionality by the client device 102 or in relation to executions of applications running on the host system 104.

In some instances, the client device 102 requests execution of a service, such as application service 140. The application service 140 is provided at a service provider environment 110. The application service 140 may be implemented to execute a process instance according to a particular logic implementation of a process scenario. For example, the process scenario may be a leave request approval process, as previously discussed. The process scenario that can be executed through the application service 140 may include a number of process steps in relation to reviewing a request for leave by an employee. In the present example, the user 112 may be an employee who requested five days of vacation within a particular time period through accessing a user interface provided for the application service 140.

The application service 140 may be executed multiple times in relation to different request with different request parameters and different process outcome. When the application service executes an instant process scenario, data is stored for the process execution. The data that is stored may be such as the data of a workflow as previously discussed. Data stored for executions of the application service 140 may be provided to a collected historic data 150.

In some instance, the collected historic data 150 is a data storage that is managed to collect process scenario execution data associated with different process scenarios and different generic workflows. The data in the collected historic data 150 may be organized in groups to correspond to different generic workflows. Such collected data may be used to support a machine-learning algorithm implemented to provide predictive services for process execution results.

In accordance with implementations of the present disclosure, the collected historic data 150 may be evaluated and a generic framework 160 may be created. The generic framework 160 may be such as already discussed. The generic framework 160 may be defined to a generic workflow corresponding to the process scenario implemented by the application service 140.

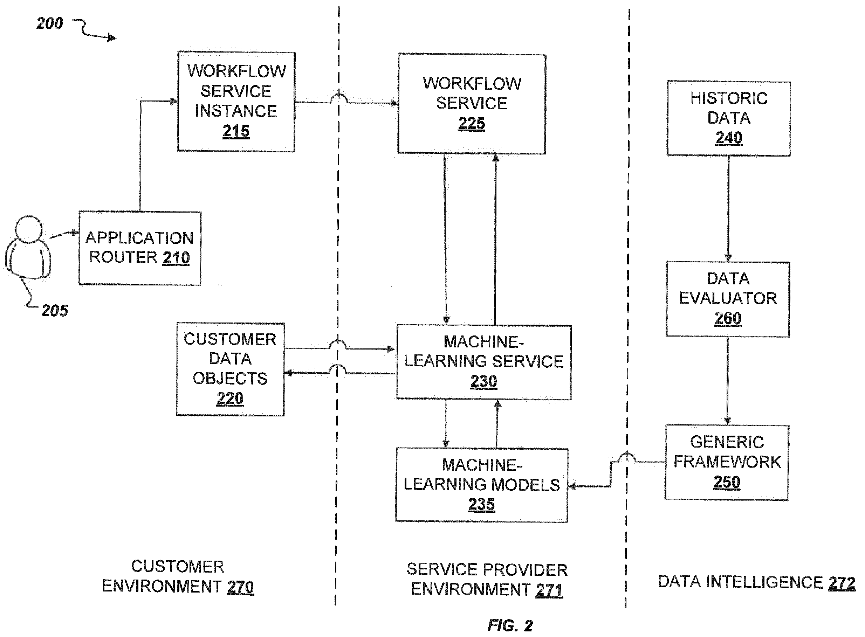

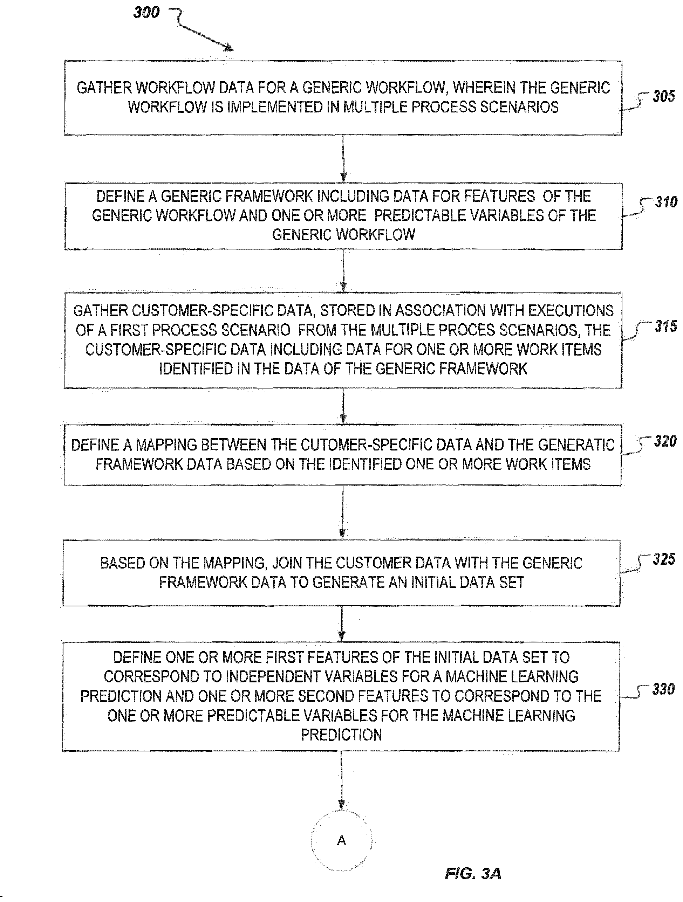

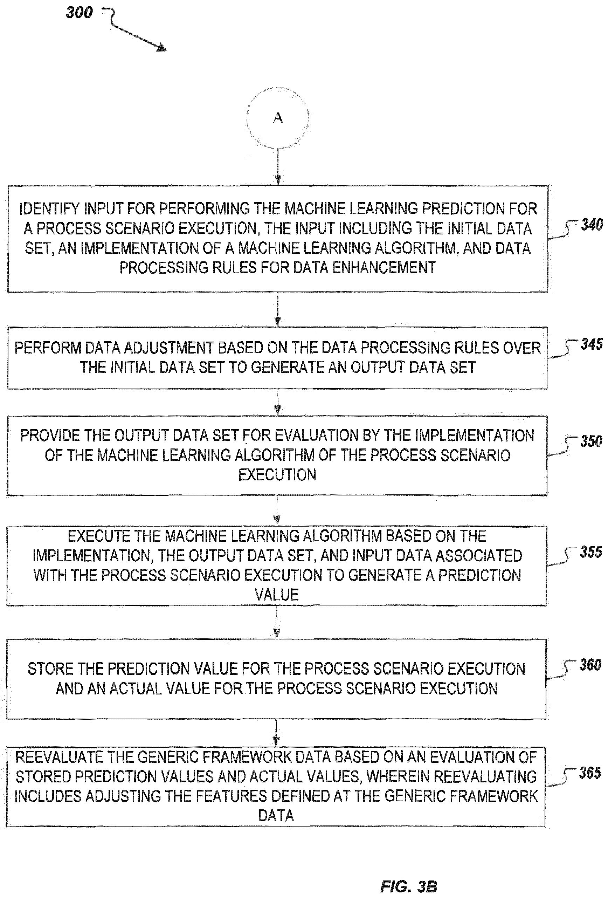

The generic framework 160 may be such as the generic framework discussed above, and further elaborated in relation to FIG. 2 and FIG. 3 below. The generic framework 160 may be pre-prepared by a data scientist or automatically generated based on collected input from systems where different process scenarios related to a generic workflow.

In some instances, the service provider environment 110 may be associated with an implemented machine-learning service 135 that implement logic for provided intelligent data preparation for execution of predictive functionality in relation to process execution of the application service 140. The machine-leaning service 135 may be associated with machine-learning models 130. The machine-learning models 130 include implementations of machine-learning algorithms that may be used for providing predictive results for process executions at the application service 140.

In some implementations, a customer, e.g. the user 112, requests to use prediction functionality for an execution of a given instance of a process scenario provided by the application service 140. When the request is received, customer-specific data may be provided to the machine learning service 135. The customer-specific data may be also provided to include a mapping of the data to the generic framework data of the generic framework 160. The machine-learning service 135 may include intelligent data preparation implemented techniques to combine the customer-specific data with the generic framework data and to clean and improve the data to include most relevant features. Such enhanced data may be provide to a machine-learning model input from the machine-learning models 130. Such model may be deployed and based on input data for a started execution of a process instance at the application service 140, prediction functionality for the given process execution instance may be provided.

In some implementations, results generated by a machine-learning model implementation with provided enhanced data through the data intelligent logic for data preparation at the machine-learning service 135 may be verified. The verification may be performed through evaluation of stored actual execution results and prediction result generated based on the implemented machine-learning logic and model at the machine-learning service 135 and the machine models 130. Further, the evaluation of the prediction result may also be related to evaluation of the determined generated framework 160. The generated framework 160 may be redefined based on stored and evaluated results. The verification may be performed by a data scientist who developed the framework.

In some implementations, validation of results provided through the machine-learning service 135 may be first evaluated, and once meeting a criterion, such as a threshold level for error between predicted and actual results, the models at the machine-learning service, implemented for prediction of process scenario executions at the application service 140 may utilize the predictive results in a productive form. In one example, the predictive functionality may be utilized to automate execution of processes at the application service 140. In such manner, the performance of the service provider environment may be improved, and fewer interactions with external systems may be performed, while process execution may be performed without details and with expected quality. The predictive functionality may be used to simulate and automate execution of steps at a process.

In some examples, in a process scenario such as an approval process, data may be provided based on combining generic framework data and customer-specific data, and a machine-learning algorithm implementation may be selected, and when the validation results of this model are acceptable, the machine-learning logic can be deployed into productive use, either manually or automatically, to automate execution of process instances running at the service provider environment 110.

In some implementations, based on the described approach in the present application, where generic framework data is combined with customer-specific data and automatically enhanced to support a machine-learning algorithm that can be seamlessly integrated to provide predictive functionality for a process instance execution, multiple improvements to the technology can be provided. For example, such an approach may provide a generic solution that can scale to fit into different application services and work with different machine-learning algorithm implementations. Further, the present approach may reduce the time needed to implement a machine-learning model into an existing framework, which may require a lot of manual effort and specific configuration. The provided machine-learning service 135 and its implemented logic to provide intelligent data preparation and integration with different machine-learning models can be implemented as a stand-alone service, independent of a particular application service.

In some implementations, the machine-learning service 135 may be reused in another service provider environment, or may be provided outside of a service provider environment and communicatively coupled to multiple service environment to provide predictive functionality for different application services.

By integrating a machine-learning service to work with service implementations at a service provider's environment, a customer, such as an end user, may be provided with automated intelligence for process execution without requesting for manual support, for example, from a data scientist.

FIG. 2 is a block diagram illustrating an example system 200 for predicting a result from a process scenario in accordance with implementations of the present disclosure. The example system 200 includes a customer environment 270 part, a service provider environment 271, and a data intelligence 272 part. The system 200 may correspond to the example computer system architecture 100 at FIG. 1.

The customer environment 270 may include an application router 210, where a process execution may be triggered, for example, by a user 205. The application router 210 may be associated with an execution of an application service. For example, the application router 210 may be part of a customer application running on a client device, such as the client device 102, FIG. 1. The customer environment 270 may include also customer data objects 220, for example, stored at a database.

The application router 210 may provide a user interface to interact with an application or service, such as the workflow service 225. The workflow service 225 may be running at the service provider environment 271. The workflow service 225 may be such as the application service 140, FIG.1. The workflow service 225 may be a stand-alone application, such as a leave request application, or may be an application module part of a general application system, for example, related to human resource services provided to employees. In relation to providing leave request services, or human resource processes, including a processes for handling leave requests, data related to the customer, internal policies, rules, and configuration, and other employee related information may be stored as part of the customer data objects 220. In particular, data about the employee, employees position, and current employee status, performance, already approved vacation days, internal leave request schedules, and so on may be stored as part of the customer data, and also may be stored.

In some implementations, the data intelligence 272 environment is set up to support machine-learning functionality provided to support prediction of process execution in relation to services implemented at the service provider environment 271. The data intelligence 272 environment includes historic data 240. The historic data 240 may be data collected from executions of process scenarios or use cases associated with a generic workflow. For example, the historic data 240 may be such as the collected historic data 150, FIG. 1.

The historic data 240 may be extracted by a data evaluator 260 and provided for the generation of a generic framework 250. The generic framework 250 may be such as the generic framework 160, FIG. 1.

In accordance with implementations of the present disclosure, the generic framework 250 may be defined for a generic workflow corresponding to a process scenario implemented by the workflow service 225 that is communicatively coupled to an application router 210 from the customer environment 270. The generic framework 250 may be such as the generic framework 160 discussed above, and further elaborated in relation to FIG. 3 below.

In some instances, the service provider environment 271 may be such as the service provider environment 110, FIG. 1 and further discussed in the present application. The service provider environment 271 may be set up to provide a software and/or hardware environment for executing instances of workflows implemented by the workflow service 225. The service provider environment may be associated with an implemented machine-learning service 230 that provides logic for intelligent data preparation for executing predictive functionality in relation to process execution at the workflow service 225. In some implementations, the machine-learning service may be running outside of the service provider environment 271 and communicate over a network with the workflow service 225 and the data intelligence 272 environment to provide predictive functionality.

The machine-leaning service 230 may be associated with machine-learning models 235. The machine-learning models 235 include implementations of machine-learning algorithms that may be used for providing predictive results for process executions at the workflow service.

When the user 205 requests to execute a workflow service instance 215 through the functionality provided by the workflow service 225, prediction functionality provided by the machine-learning service 230 may be triggered. The workflow service instance 225 may be triggered by the user 205 at the application router 210.

For example, the user 205 may send a leave request. The received request triggers a workflow instance execution, where input for the execution may include user 205 identification information, request data, such as the requested number of days of vacation, etc. The request for execution of the process scenario instance may trigger a communication between the workflow service 225 and the machine-learning service 230. The machine-learning service 230 may request customer-specific data from the customer environment 270 and receive data from the customer data objects 220. Such customer-specific data may be combined with data acquired from the generic framework 250 and also with a machine-learning implementation from the machine-learning models 235 to provide prediction results for the process scenario instance 215.

When the workflow service 225 communicates with the machine-learning service 230, the customer-specific data may be received to include the customer data objects 220. The customer data objects 220 may be received and mappings between the customer data objects and data of the generic framework 250 may be defined.

For example, in a workflow service instance 215 may be associated with a purchase requisition, that is associated with a generic framework for an approval workflow. Table 1 present example data for a generic framework for an approval workflow. Table 1 includes workflow information regarding purchase requisitions and the approval status.

**Table 1**

| **STATUS** | **WI_ID** | **COUNT(WI_TYPE)** | **WI_LANG** | **WI_AED** |
|---|---|---|---|---|
| APPROVED | 461920021 | 1 | E | 20150507 |
| APPROVED | 461920023 | 1 | E | 20150504 |
| APPROVED | 461920025 | 1 | E | 20150507 |
| REJECTED | 462291584 | 1 | E | 99991231 |
| REJECTED | 462333456 | 1 | E | 20170411 |
| REJECTED | 462333458 | 1 | E | 20150505 |

In Table 1, the WI_ID property column identifies work items identification numbers, and the status column includes status values. The status column corresponds to values that has to be predicted by a machine learning model. The columns - Count(WI_TYPE), WI_LANG, and WI_AED, are features that may manually defined or selected by the data evaluator 260 when defining the generic framework 250, to improve the machine learning service accuracy.

In some instances, the features defined at the generic framework are not sufficient to describe the use case of purchase requisitions. That is why customer-specific data like price, quantity, etc., that is related to a particular customer service infrastructure where an instance of a purchase requisition process is running may be utilized. The purchase requisition process instance may be a use case of the approval workflow as discussed above. For example, the customer-specific data may be data related to work items, or other entities identified in the data as presented in Table 1. The data associated with the generic workflow (e.g., Table 1) may be extended with the customer-specific data. The extended data may be additionally enhanced to provide prepared data to serve for running prediction logic over the data. Extending the data associated with the generic workflow with customer-specific data associated with a particular use case at a particular service environment may support prediction of results of process execution and may improve accuracy of machine-learning techniques applied over the joined and enhanced data. The data at Table 1 may be joined with customer specific information related to a purchase requisition process to ensure a good performance of the machine learning logic.

To include customer specific data, a data set that includes information to the purchase requisitions and a mapping to the work items in the generic framework may be invoked. For example, the customer data objects 220 may include such customer-specific information. The customer-specific data 220 and the data of the generic framework 250 may be joined based on mapping according to the work item ID. The joined data may be defined as an initial data set that can be enhanced and adjusted to provide output data that may be used by the machine-learning service.

The initial data set defined based on the joining may be such as the data presented at Table 2 below in the scenario of product requisitions as discussed above in relation to Table 1. In a present example case the data includes the work item ID, WI_ID, such that the data can be joined directly.

**Table 2**

| **STATUS** | **WI_ID** | **COUNT (WI_ TYPE)** | **WI_ LANG** | **WI_AED** | **CATALOGID** | **CATEGORY _ID** | **CUR.** | **PRICE** |
|---|---|---|---|---|---|---|---|---|
| APPROVED | 461920021 | 1 | E | 20150507 | OVERSEA_IT_USD9 | EDP_NOTEB | USD | 1084.26 |
| APPROVED | 461920023 | 1 | E | 20150504 | OVERSEA_IT_USD9 | EDP_NOTEB | USD | 1084.26 |
| APPROVED | 461920025 | 1 | E | 20150507 | OVERSEA_IT_USD9 | EDP_NOTEB | USD | 1084.26 |
| REJECTED | 462291584 | 1 | E | 99991231 | EUROPE_IT9_EUR | EDP_M-PHO | USD | 1050.00 |
| REJECTED | 462333456 | 1 | E | 20170411 | OVERSEA_IT_USD9 | EDP_NOTEB | USD | 2265.53 |
| REJECTED | 462333458 | 1 | E | 20150505 | OVERSEA_IT_USD9 | EDP_NOTEB | USD | 2265.53 |

The defined initial data set, such as Table 2, may be separated into two sets, where a first set includes all independent variables, i.e. all columns that describe the problem, and a second set including the dependent variable, i.e. the column that has to be predicted.

In some instances, intelligent data preprocessing may be performed over the initial data set to generate a features set based on the combination of generic framework data with customer data. An example data preprocessing may be performed according to a data processing algorithm 1 as presented in Table 3.

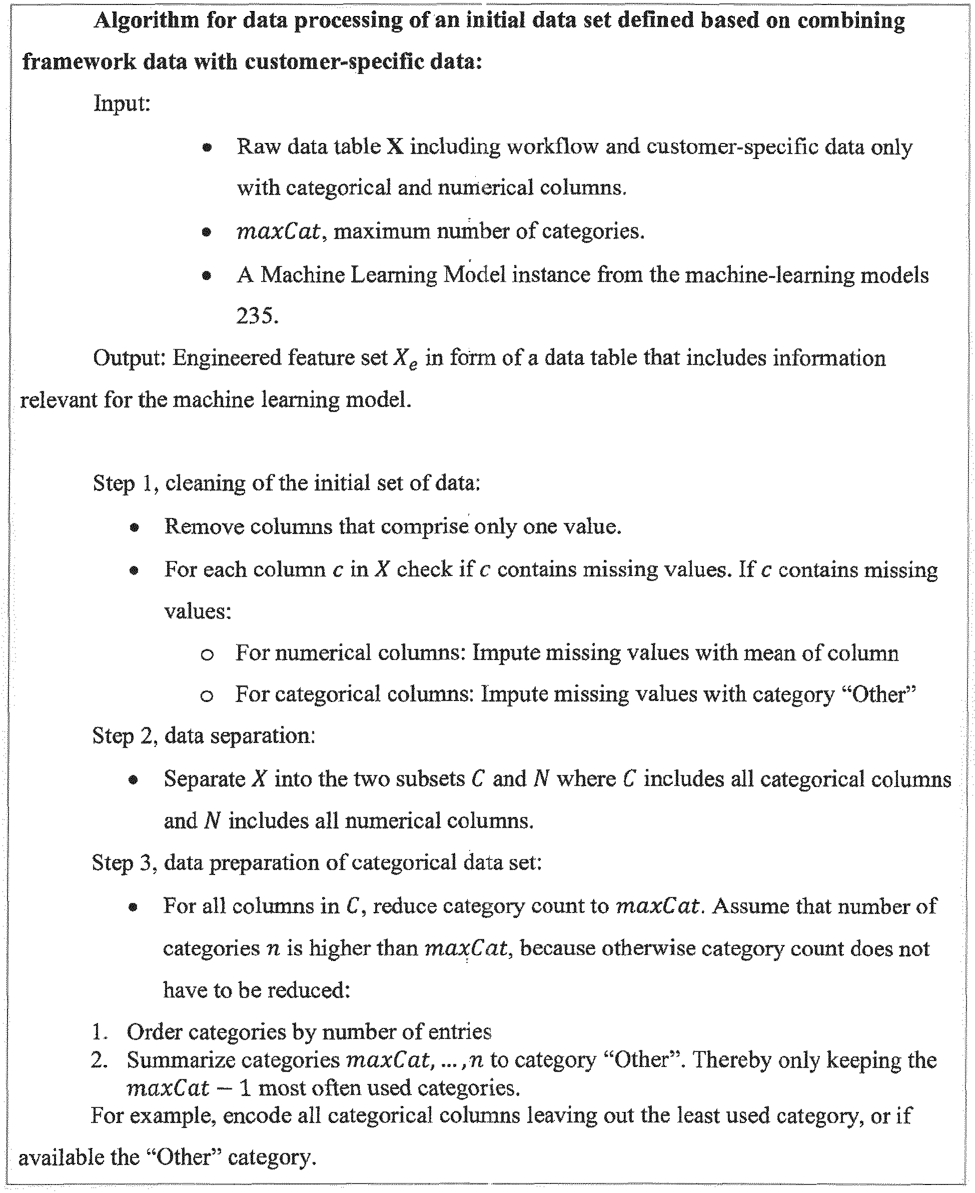

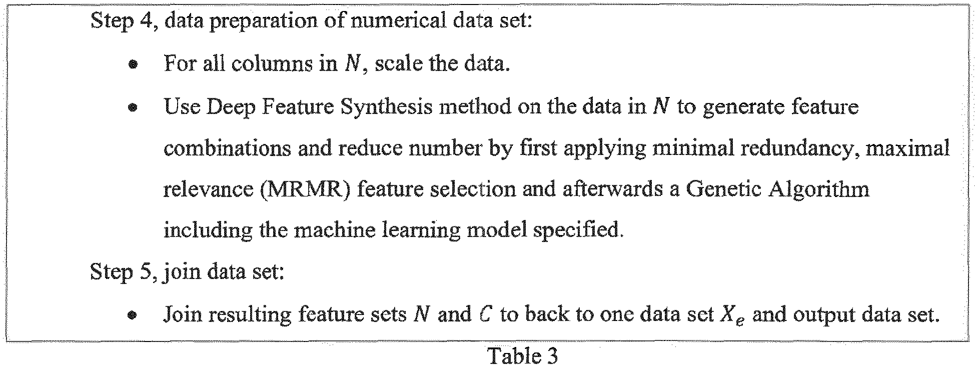

In some instances, a result data set may be generated that may be such as an output data set discussed in relation to FIG. 1 and FIG. 3. For example, Table 4 presents a resultant output data set that may be provided to a machine-learning service to provide predictive functionality. The resulting feature set may be evaluated by either the data scientist or a data evaluation tool and when approved can be brought into production to support execution of a workflow service, such as workflow service 225.

**Table 4**

| **((PRICE*count(WI_TYPE))+ (PRICE*WI_AED))** | **((PRICE*count(WI_TYPE))+ (VALUE+count(WI_TYPE)))** | **((PRICE*count(WI_TYPE))+ (VALUE+WI_AED))** | **((PRICE*count(WI_TYPE))+ (count(WI_TYPE)*WI_AED))** | **((PRICE"WI_AED)* (VALUE+count(WI_TYPE)))** |
|---|---|---|---|---|
| **0.014311** | **-0.284341** | **-0.211037** | **0.053453** | **-0.001738** |
| **0.014311** | **-0.284341** | **-0.211037** | **0.053453** | **-0.001738** |
| **0.014311** | **-0.284341** | **-0.211037** | **0.053453** | **-0.001738** |
| **0.014341** | **-0.284389** | **-0.211085** | **0.053470** | **-0.001742** |
| **0.014341** | **-0.284388** | **-0.211085** | **0.053470** | **-0.001742** |
| **0.014341** | **-0.284389** | **-0.211085** | **0.053470** | **-0.001742** |
| **-0.173755** | **-0.284389** | **5.440934** | **-1.371478** | **0.053328** |
| **0.014285** | **-0.284300** | **-0.210987** | **0.053436** | **-0.001735** |
| **0.014286** | **-0.284300** | **-0.210995** | **0.053438** | **-0.001735** |
| **0.014285** | **-0.284300** | **-0210987** | **0.053436** | **-0.001735** |
| **0.014310** | **-0.284340** | **-0.211035** | **0.053452** | **-0.001738** |
| **0.014310** | **-0.284340** | **-0.211035** | **0.053452** | **-0.001738** |
| **0.014310** | **-0.284340** | **-0.211035** | **0.053452** | **-0.001738** |
| **-0.173396** | **-0.284341** | **5.440982** | **-1.371496** | **0.053206** |

In some implementations according to the present disclosure, the machine-learning service 230 may include intelligent data preparation implemented techniques to combine the customer-specific data with the generic framework data and to clean and improve the data to include most relevant features. Such techniques may include the algorithm for data cleaning and preparation as discussed above in relation to Table 3. Such output data (e.g. data at Table 4) may be provided to a machine-learning model input from the machine-learning models 235. Such model may be deployed and based on input data for a started execution of a process instance at the workflow service 225, prediction functionality for the given workflow service instance may be provided.

When the user 205 requests to use machine learning capability of the machine-learning service 230, a connection from the customer data objects 220 is setup by the machine learning service 230 and an initial machine learning model can be calculated and evaluated. After the evaluation, the generated model may be retrained and executed in a prefixed schedule.

When the machine-learning service logic is executed, a prediction can be made, and the result may be sent back to workflow service 225 to be exposed via an application programming interface (API) either to be used by the user 205 directly or to be displayed in a user interface at the application router 210.

With techniques included in proposed approach a generic framework is prepared once and the machine learning models for used for the different use cases. In such manner, the machine learning models may be generated automatically based on pointes to customer specific data related to the use cases. This may lead to a scalable solution and provide machine learning capabilities out-of-the-box without manual intervention.

FIG. 3A and 3B are flowcharts for an example method 300 for providing output data for evaluation by a machine learning service to generate a predicted process execution result in accordance with implementations of the present disclosure. It will be understand that method 300 and related methods may be performed, for example, by any suitable system, environment, software, and hardware, or a combination of systems, environments, software, and hardware, as appropriate. In some implementations, the example method 300 and related methods are executed by one or more components of the system 100 described above with respect to FIG. 1, or system 20 described above with respect to FIG. 2.

At 305, workflow data for a generic workflow is gathered. The workflow data may be received from another system, where workflow data is stored for different services, or may be received directly from system where workflow data is created as part of a process execution. For example, a generic workflow is an approval process that can be implemented in multiple use cases or process scenarios, such as leave request process, process requisition, etc. The use cases associated with a generic workflow share common features or characteristics. Different process scenarios corresponding to use cases may be defined as different implementations of a generic workflow into different software applications or services.

At 310, a generic framework is defined to include data for features of the generic workflow and predictable variables of the generic workflow. The predictable variable may be features from the generic workflow data that include data that is dependent on other feature data, non-predictable variable. For example, in a process scenario of a leave request, a feature defining whether a request for vacation by an employee has been approved may be a Boolean variable including 0 for declined vacation requests, and 1 for approved vacation request. The value of the feature for the outcome of the request, namely, the result value, may be dependent on data features such as a number of vacation days taken so far, number of requested days for the vacation, period of the year, employee identification number, employee location, employee position, etc.

In some instances, the generic framework as defined based on gathered workflow data, may include data for multiple independent variables associated with the multiple process scenarios. In some instances, some of the independent variables may be related to some of the process scenarios, where others may be related to more than one process scenarios, or to all process scenarios. The predictable variables may be one or more, and they are defined for the generic framework and related to the multiple process scenarios implementing the generic workflow.

At 315, customer-specific data is gathered. The customer-specific data may be stored in a customer computer environment in relation to executions of a first process scenario from the multiple process scenarios associated with the generic workflow. The customer-specific data includes data for one or more work items identified in the data of the generic framework.

In some instances, work items identified in the data of the generic framework and also included in the customer-specific data may be related to entities associated with execution of a process step from the first process scenario. For example, if the first process scenario is a purchase requisition process associated with purchasing of a product, a work item associated with a step from such a process is associated with the product being purchased. The product may be identified by a product identification number, or other text of numerical label.

In some instances, the customer-specific data is data generated during productive executions of the first process scenario at a particular client environment. The client environment may be associated with specific requirements, including rules for process execution, hardware specifics, data requirements, etc.

At 320, a mapping between the customer specific data, as gathered at 315, and the generic framework data is defined. The mapping is defined on the identified work items in the customer-specific data and the generic framework data.

At 325, based on the mapping, the customer-specific data and the generic framework data are joined to generate an initial data set. The initial data set may be provided for data enhancement, adjustment, clearing, and/or filtering, to provide an output data set that may be used for predicting results of a process instance execution. For example, as the customer specific data is associated with the first process scenario, based on scenario data received for an initiated execution of the first process scenario, a prediction may be performed for that instance execution.

At 330, first features of the initial data set are defined to correspond to independent variables for a machine learning prediction algorithm that may be utilized to predict process results based on implementations of the present disclosure. Further, at 330, second features of the initial data set are defined to correspond to the predictable variables for the machine learning prediction.

At 340, input for performing the machine learning prediction for a process scenario execution is identified. For example, the input for a process scenario execution may be input from a customer environment associated with the customer-specific data that was gathered at 305. In some implementations, the process scenario execution that is to be predicted may be an instance execution of the first process scenario associated with the customer-specific data.

In some other implementations, the process scenario execution that is to be predicted may be an instance execution of another process scenario at a customer environment associated with the customer-specific data, where the other process scenario is from the multiple process scenarios associated with the generic workflow. In yet another implementation, the predicted result for the process scenario execution may be in relation to a different process scenario than the first process scenario associated with the customer-specific data. The process scenario execution may be performed at a different environment from the environment where the customer-specific data is generated and gathered from.

In some implementations, the input that is identified for performing the machine leaning prediction includes the initial data set, an implementation of a machine learning algorithm, and data processing rules for data enhancement.

In some implementations, the identification of the input for the machine learning prediction is performed at a machine learning service. The machine-learning service may be associated with a service providing the process scenario execution and may be implemented as part of an environment of a service provider. For example, the service provider environment may be such as the service provider environment discussed in relation to FIG. 1 and FIG. 2.

At 345, data adjustment is performed over the initial data set. The data adjustment is based on data processing rules defined for the machine learning prediction. The data processing rules may include data cleaning rules, rules for data adjustment that may be associated with types of data stored in relation to features from the features defined for the initial data set, rules for data aggregation or modification, rules for data preparation, etc. The data processing rules may be predefined for the execution of the machine learning service when running over a provided initial data set. Performing data adjustment over the initial data set based on the data processing rules may result in generating an output data set that would support improved prediction of execution results of process scenarios.

In some implementations, performing the data adjustment may include performing data cleaning on the initial data set. The data cleaning may include an evaluation of the initial data set according to data cleaning rules included in the data processing rules to generate a clean data set.

Performing the data adjustment may include evaluating features from the clean data set generated after performing data cleaning over the initial data set. The data adjustment may be performed according to a type of data stored for a feature from the feature.

In some implementations, based on performing data cleaning and data adjustment, an output data set may be generated and may be provided for evaluation by the implementation of the machine learning algorithm, as identified in the input for performing the machine learning prediction. The output data set may include a set of features defined based on evaluation and combination of the features from the clean data set according to data preparation rules for numerical and for categorical data.

In some instances, the data cleaning is performed based on evaluation of occurrences of values in store data in relation to a feature from the one or more first features corresponding to the independent variables according to the data cleaning rules.

At 350, the output data is provided for evaluation by the implementation of the machine learning algorithm for the process scenario execution. The output data is the data that is used to predict a result of the process scenario execution. For example, in the example of a leave request approval process, based on generated output data it may be predicted whether a received new request for leave would be approved or not.

At 355, the identified machine learning algorithm is executed based on its implementation, where the output data set and input data are also provided for the execution. The input data is data associated with the process scenario execution that is evaluated and used for a prediction. Based on the machine learning algorithm execution, a prediction value for the process result is generated.

At 360, the prediction value is stored for the process scenario execution. The process scenario may be executed and an actual value for the execution can be stored as well. The prediction value may be equal or different to the actual value.

At 365, the generic framework data is reevaluated based on evaluation of stored prediction values and actual value. When a number of process instances are executed and also prediction values for the process instances are generated, these value may be evaluated to determine the quality of prediction. For example, if predicted values correspond to actual value, then the prediction logic is accurate and reliable to be used to automate process execution. If predicted values diverge from the actual values, the generic framework that is used for the prediction may be re-evaluated. For example, more generic framework data may be used, for example, data from executed scenarios where the predicted values are different from actual values. Providing more workflow data may support to re-configure the generic framework and to adjust some of the features defined in the generic framework data.

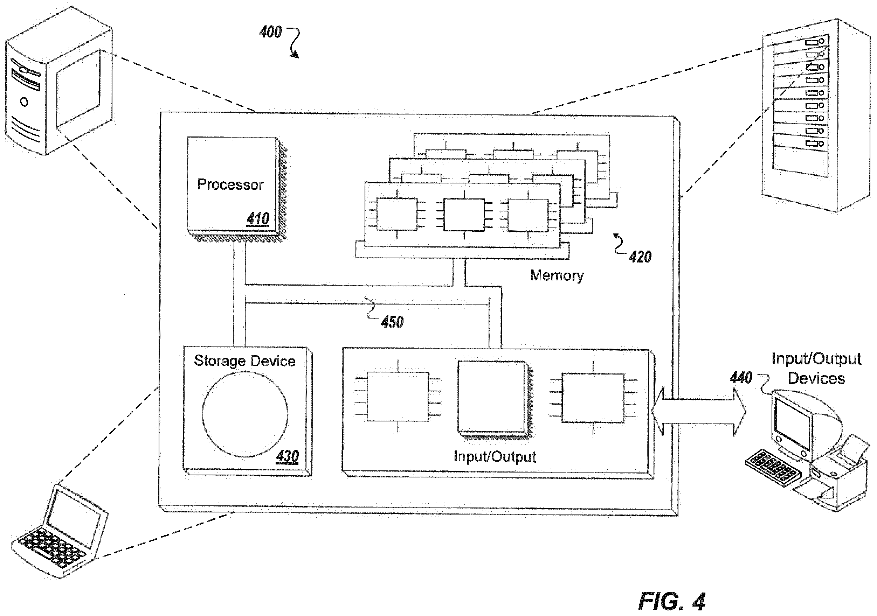

Referring now to FIG. 4, a schematic diagram of an example computing system 400 is provided. The system 400 can be used for the operations described in association with the implementations described herein. For example, the system 400 may be included in any or all of the server components discussed herein. The system 400 includes a processor 410, a memory 420, a storage device 430, and an input/output device 440. The components 410, 420, 430, 440 are interconnected using a system bus 450. The processor 410 is capable of processing instructions for execution within the system 400. In some implementations, the processor 410 is a single-threaded processor. In some implementations, the processor 410 is a multi-threaded processor. The processor 410 is capable of processing instructions stored in the memory 420 or on the storage device 430 to display graphical information for a user interface on the input/output device 440.

The memory 420 stores information within the system 400. In some implementations, the memory 420 is a computer-readable medium. In some implementations, the memory 420 is a volatile memory unit. In some implementations, the memory 420 is a non-volatile memory unit. The storage device 430 is capable of providing mass storage for the system 400. In some implementations, the storage device 430 is a computer-readable medium. In some implementations, the storage device 430 may be a floppy disk device, a hard disk device, an optical disk device, or a tape device. The input/output device 440 provides input/output operations for the system 400. In some implementations, the input/output device 440 includes a keyboard and/or pointing device. In some implementations, the input/output device 440 includes a display unit for displaying graphical user interfaces.

The features described can be implemented in digital electronic circuitry, or in computer hardware, firmware, software, or in combinations of them. The apparatus can be implemented in a computer program product tangibly embodied in an information carrier (e.g., in a machine-readable storage device, for execution by a programmable processor), and method steps can be performed by a programmable processor executing a program of instructions to perform functions of the described implementations by operating on input data and generating output. The described features can be implemented advantageously in one or more computer programs that are executable on a programmable system including at least one programmable processor coupled to receive data and instructions from, and to transmit data and instructions to, a data storage system, at least one input device, and at least one output device. A computer program is a set of instructions that can be used, directly or indirectly, in a computer to perform a certain activity or bring about a certain result. A computer program can be written in any form of programming language, including compiled or interpreted languages, and it can be deployed in any form, including as a stand-alone program or as a module, component, subroutine, or other unit suitable for use in a computing environment.

Suitable processors for the execution of a program of instructions include, by way of example, both general and special purpose microprocessors, and the sole processor or one of multiple processors of any kind of computer. Generally, a processor will receive instructions and data from a read-only memory or a random access memory or both. Elements of a computer can include a processor for executing instructions and one or more memories for storing instructions and data. Generally, a computer can also include, or be operatively coupled to communicate with, one or more mass storage devices for storing data files; such devices include magnetic disks, such as internal hard disks and removable disks; magneto-optical disks; and optical disks. Storage devices suitable for tangibly embodying computer program instructions and data include all forms of non-volatile memory, including by way of example semiconductor memory devices, such as EPROM, EEPROM, and flash memory devices; magnetic disks such as internal hard disks and removable disks; magneto-optical disks; and CD-ROM and DVD-ROM disks. The processor and the memory can be supplemented by, or incorporated in, ASICs (application-specific integrated circuits).

To provide for interaction with a user, the features can be implemented on a computer having a display device such as a CRT (cathode ray tube) or LCD (liquid crystal display) monitor for displaying information to the user and a keyboard and a pointing device such as a mouse or a trackball by which the user can provide input to the computer.

The features can be implemented in a computer system that includes a back-end component, such as a data server, or that includes a middleware component, such as an application server or an Internet server, or that includes a front-end component, such as a client computer having a graphical user interface or an Internet browser. The components of the system can be connected by any form or medium of digital data communication such as a communication network. Examples of communication networks include, for example, a LAN, a WAN, and the computers and networks forming the Internet.

The computer system can include clients and servers. A client and server are generally remote from each other and typically interact through a network, such as the described one. The relationship of client and server arises by virtue of computer programs running on the respective computers and having a client-server relationship to each other.

## Claims

1. A computer implemented method (300) comprising:
mapping (320) customer-specific data (220) with generic framework data based on identification of one or more work items included in the customer-specific data (220) and the generic framework data, wherein the generic framework data is generated for a generic workflow associated with a plurality of process scenarios provided by a plurality of services;
based on the mapping, joining (325) the customer-specific data (220) with the generic framework data to generate an initial data set to be provided for predicting one or more predictable variable for a process scenario from the plurality of process scenarios associated with the generic workflow;
defining (330) one or more first features of the initial data set to correspond to independent variables for a machine learning prediction and one or more second features to correspond to the one or more predictable variables for the machine learning prediction;
identifying (340) input for performing the machine learning prediction for a process scenario execution, the input including the initial data set, an implementation of a machine learning algorithm (130, 235), and data processing rules for data enhancement;
performing (345) data adjustment based on the data processing rules over the initial data set to generate an output data set; and
providing (350) the output data set for evaluation by the implementation of the machine learning algorithm (130, 235) of the process scenario execution.

2. The method (300) of claim 1, further comprising:
receiving (305) workflow data for the generic workflow, wherein the generic workflow is implemented in multiple process scenarios, and wherein the workflow data is generated during execution of instances of multiple process scenarios.

3. The method (300) of claim 2, further comprising:
based on the received workflow data, defining (310) a generic framework (160, 250) to include data for features of the generic workflow and the one or more predictable variables of the generic workflow, wherein the features are determined based on the workflow data and comprise a feature to identify work items associated with an executed instance of the generic workflow, and
wherein, preferably, the method further comprising:
receiving (315) customer-specific data (220), the customer-specific data (220) being stored in relation to executions of a first process scenario from the plurality of process scenarios, wherein the customer-specific data (220) includes data for one or more work items identified in the data of the generic framework (160, 250).

4. The method (300) of any one of the preceding claims, wherein performing the data adjustment over the initial data set comprises:
performing data cleaning on the initial data set, the data cleaning being based on an evaluation of the initial data set according to data cleaning rules included in the data processing rules to generate a clean data set, and
wherein, preferably, performing the data adjustment further comprises:
evaluating features from the clean data set according to a type of data stored for a feature from the features to generate the output data set to be provided for evaluation by the implementation of the machine learning algorithm (130, 235), wherein the output data set includes a set of features defined based on evaluation and combination of the features from the clean data set according to data preparation rules for numerical and for categorical data.

5. The method (300) of claim 4, wherein the data cleaning is performed based on evaluation of occurrences of values in store data in relation to a features from the one or more first features corresponding to the independent variables according to the data cleaning rules.

6. The method (300) of any one of the preceding claims, wherein the data processing rules for data enhancement comprise a rule associated with adjusting data entries for a feature from the one or more first features based on a maximum number of categories of data entries included in stored data for the feature.

7. The method (300) of any one of the preceding claims, further comprising:
executing (355) the machine learning algorithm (130, 235) based on the implementation, the output data set, and input data associated with the process scenario execution, to generate a prediction value;
storing (360) the prediction value for the process scenario execution and an actual value for the process scenario execution, wherein the actual value is determined based on actual execution of the process scenario at a running service implementing a process scenario instance and associated with the input data used for generating the prediction value; and
reevaluating (365) the generic framework data based on an evaluation of stored prediction values and actual values, wherein reevaluating the generic framework data includes adjusting the features defined at the generic framework data.

8. A non-transitory, computer-readable medium storing computer-readable instructions executable by a computer and configured to:
map (320) customer-specific data (220) with generic framework data based on identification of one or more work items included in the customer-specific data (220) and the generic framework data, wherein the generic framework data is generated for a generic workflow associated with a plurality of process scenarios provided by a plurality of services;
based on the mapping, join (325) the customer-specific data (220) with the generic framework data to generate an initial data set to be provided for predicting one or more predictable variable for a process scenario from the plurality of process scenarios associated with the generic workflow;
define (330) one or more first features of the initial data set to correspond to independent variables for a machine learning prediction and one or more second features to correspond to the one or more predictable variables for the machine learning prediction;
identify (340) input for performing the machine learning prediction for a process scenario execution, the input including the initial data set, an implementation of a machine learning algorithm (130, 235), and data processing rules for data enhancement;
perform (345) data adjustment based on the data processing rules over the initial data set to generate an output data set; and
provide (350) the output data set for evaluation by the implementation of the machine learning algorithm (130, 235) of the process scenario execution.

9. The computer-readable medium of claim 8, further storing instructions configured to:
receive (305) workflow data for the generic workflow, wherein the generic workflow is implemented in multiple process scenarios, and wherein the workflow data is generated during execution of instances of multiple process scenarios; and
based on the received workflow data, define (310) a generic framework (160, 250) to include data for features of the generic workflow and the one or more predictable variables of the generic workflow, wherein the features are determined based on the workflow data and comprise a feature to identify work items associated with an executed instance of the generic workflow, and
wherein, preferably, further storing instructions configured to:
receive (315) customer-specific data (220), the customer-specific data (220) being stored in relation to executions of a first process scenario from the plurality of process scenarios, wherein the customer-specific data (220) includes data for one or more work items identified in the data of the generic framework (160, 250).

10. The computer-readable medium of claim 8, wherein the instructions to perform the data adjustment over the initial data set comprises instructions configured to:
perform data cleaning on the initial data set, the data cleaning being based on an evaluation of the initial data set according to data cleaning rules included in the data processing rules to generate a clean data set; and
evaluate features from the clean data set according to a type of data stored for a feature from the features to generate the output data set to be provided for evaluation by the implementation of the machine learning algorithm (130, 235), wherein the output data set includes a set of features defined based on evaluation and combination of the features from the clean data set according to data preparation rules for numerical and for categorical data, and
wherein, preferably, the data cleaning is performed based on evaluation of occurrences of values in store data in relation to a features from the one or more first features corresponding to the independent variables according to the data cleaning rules.

11. The computer-readable medium of claim 10, further storing instructions configured to:
execute (355) the machine learning algorithm (130, 235) based on the implementation, the output data set, and input data associated with the process scenario execution, to generate a prediction value;
store (360) the prediction value for the process scenario execution and an actual value for the process scenario execution, wherein the actual value is determined based on actual execution of the process scenario at a running service implementing a process scenario instance and associated with the input data used for generating the prediction value; and
reevaluate (365) the generic framework data based on an evaluation of stored prediction values and actual values, wherein reevaluating the generic framework data includes adjusting the features defined at the generic framework data.

12. A system (200, 400) comprising:
a computing device (410); and
a computer-readable storage device (420, 430) coupled to the computing device (410) and having instructions stored thereon which, when executed by the computing device (410), cause the computing device (410) to perform operations, the operations comprising:
mapping (320) customer-specific data (220) with generic framework data based on identification of one or more work items included in the customer-specific data (220) and the generic framework data, wherein the generic framework data is generated for a generic workflow associated with a plurality of process scenarios provided by a plurality of services;
based on the mapping, joining (325) the customer-specific data (220) with the generic framework data to generate an initial data set to be provided for predicting one or more predictable variable for a process scenario from the plurality of process scenarios associated with the generic workflow;
defining (330) one or more first features of the initial data set to correspond to independent variables for a machine learning prediction and one or more second features to correspond to the one or more predictable variables for the machine learning prediction;
identifying (340) input for performing the machine learning prediction for a process scenario execution, the input including the initial data set, an implementation of a machine learning algorithm (130, 235), and data processing rules for data enhancement;
performing (345) data adjustment based on the data processing rules over the initial data set to generate an output data set; and
providing (350) the output data set for evaluation by the implementation of the machine learning algorithm (130, 235) of the process scenario execution.

13. The system (200, 400) of claim 12, wherein the computer-readable storage device (420, 430) includes further instructions which when executed by the computing device (410), cause the computing device (410) to perform operations comprising:
receiving (305) workflow data for the generic workflow, wherein the generic workflow is implemented in multiple process scenarios, and wherein the workflow data is generated during execution of instances of multiple process scenarios; and
based on the received workflow data, defining (310) a generic framework (160, 250) to include data for features of the generic workflow and the one or more predictable variables of the generic workflow, wherein the features are determined based on the workflow data and comprise a feature to identify work items associated with an executed instance of the generic workflow.

14. The system (200, 400) of claim 13, wherein the computer-readable storage device (420, 430) includes further instructions which when executed by the computing device (410), cause the computing device (410) to perform operations comprising:
receiving (315) customer-specific data (220), the customer-specific data (220) being stored in relation to executions of a first process scenario from the plurality of process scenarios, wherein the customer-specific data (220) includes data for one or more work items identified in the data of the generic framework (160, 250).

15. The system (200, 400) of any one of the preceding claims 12 to 14, wherein the instructions to perform the data adjustment over the initial data set comprises instructions which when executed by the computing device (410), cause the computing device (410) to perform operations comprising:
performing data cleaning on the initial data set, the data cleaning being based on an evaluation of the initial data set according to data cleaning rules included in the data processing rules to generate a clean data set, wherein the data cleaning is performed based on evaluation of occurrences of values in store data in relation to a features from the one or more first features corresponding to the independent variables according to the data cleaning rules; and
evaluating features from the clean data set according to a type of data stored for a feature from the features to generate the output data set to be provided for evaluation by the implementation of the machine learning algorithm (130, 235), wherein the output data set includes a set of features defined based on evaluation and combination of the features from the clean data set according to data preparation rules for numerical and for categorical data, and
wherein, preferably, the computer-readable storage device includes further instructions which when executed by the computing device, cause the computing device to perform operations comprising:
executing (355) the machine learning algorithm (130, 235) based on the implementation, the output data set, and input data associated with the process scenario execution, to generate a prediction value;
storing (360) the prediction value for the process scenario execution and an actual value for the process scenario execution, wherein the actual value is determined based on actual execution of the process scenario at a running service implementing a process scenario instance and associated with the input data used for generating the prediction value; and
reevaluating (365) the generic framework data based on an evaluation of stored prediction values and actual values, wherein reevaluating the generic framework data includes adjusting the features defined at the generic framework data.

## Patentansprüche

1. Computerimplementiertes Verfahren (300), umfassend:
Zuordnen (320) von kundenspezifischen Daten (220) zu generischen Framework-Daten auf der Basis einer Identifizierung eines Arbeitsgegenstands oder mehrerer Arbeitsgegenstände, der/die in die kundenspezifischen Daten (220) und die generischen Framework-Daten einbezogen ist/sind, wobei die generischen Framework-Daten für einen generischen Workflow erzeugt werden, der mit einer Mehrzahl von Prozessszenarien zusammenhängt, die durch eine Mehrzahl von Diensten bereitgestellt werden;
auf der Basis des Zuordnens, Verbinden (325) der kundenspezifischen Daten (220) mit den generischen Framework-Daten zum Erzeugen eines Anfangsdatensatzes, der zum Vorhersagen einer oder mehrerer vorhersagbaren Variablen für ein Prozessszenario von der Mehrzahl von Prozessszenarien, die mit dem generischen Workflow zusammenhängen, bereitgestellt werden soll;
Festlegen (330) von einem oder mehreren ersten Merkmal(en) des Anfangsdatensatzes entsprechend unabhängigen Variablen für eine Maschinenlernvorhersage und von einem oder mehreren zweiten Merkmal(en) entsprechend der einen oder den mehreren vorhersagbaren Variablen für die Maschinenlernvorhersage;
Identifizieren (340) einer Eingabe zum Durchführen der Maschinenlernvorhersage für eine Prozessszenario-Ausführung, wobei die Eingabe den Anfangsdatensatz, eine Implementierung eines Maschinenlernalgorithmus (130, 235) und Datenverarbeitungsregeln für eine Datenverbesserung umfasst;
Durchführen (345) einer Dateneinstellung auf der Basis der Datenverarbeitungsregeln über dem Anfangsdatensatz zum Erzeugen eines Ausgabedatensatzes; und
Bereitstellen (350) des Ausgabedatensatzes zur Bewertung durch die Implementierung des Maschinenlernalgorithmus (130, 235) der Prozessszenario-Ausführung.

2. Verfahren (300) nach Anspruch 1, ferner umfassend:
Empfangen (305) von Workflowdaten für den generischen Workflow, wobei der generische Workflow in mehreren Prozessszenarien implementiert ist und wobei die Workflowdaten während der Ausführung von Instanzen von mehreren Prozessszenarien erzeugt werden.

3. Verfahren (300) nach Anspruch 2, ferner umfassend:
auf der Basis der empfangenen Workflowdaten, Festlegen (310) eines generischen Frameworks (160, 250), so dass er Daten für Merkmale des generischen Workflows und der einen oder mehreren vorhersagbaren Variablen des generischen Workflows umfasst, wobei die Merkmale auf der Basis der Workflowdaten bestimmt werden und ein Merkmal zum Identifizieren von Arbeitsgegenständen umfassen, die mit einer ausgeführten Instanz des generischen Workflows zusammenhängen, und
wobei das Verfahren vorzugsweise ferner umfasst:
Empfangen (315) von kundenspezifischen Daten (220), wobei die kundenspezifischen Daten (220) in Bezug auf Ausführungen eines ersten Prozessszenarios von der Mehrzahl von Prozessszenarien gespeichert werden, wobei die kundenspezifischen Daten (220) Daten für einen Arbeitsgegenstand oder mehrere Arbeitsgegenstände umfassen, die in den Daten des generischen Frameworks (160, 250) identifiziert worden sind.

4. Verfahren (300) nach einem der vorhergehenden Ansprüche, wobei das Durchführen der Dateneinstellung über den Anfangsdatensatz umfasst:
Durchführen einer Datenbereinigung mit dem Anfangsdatensatz, wobei die Datenbereinigung auf einer Bewertung des Anfangsdatensatzes gemäß Datenbereinigungsregeln basiert, die in die Datenverarbeitungsregeln zum Erzeugen eines bereinigten Datensatzes einbezogen sind, und
wobei, vorzugsweise, das Durchführen der Dateneinstellung ferner umfasst:
Bewerten von Merkmalen von dem bereinigten Datensatz gemäß eines Typs von Daten, die für ein Merkmal von den Merkmalen zum Erzeugen des Ausgabedatensatzes gespeichert sind, der zur Bewertung durch die Implementierung des Maschinenlernalgorithmus (130, 235) bereitgestellt werden soll, wobei der Ausgabedatensatz einen Satz von Merkmalen umfasst, die auf der Basis einer Bewertung und einer Kombination der Merkmale von dem bereinigten Datensatz gemäß Datenerstellungsregeln für numerische und für kategorische Daten festgelegt werden.

5. Verfahren (300) nach Anspruch 4, wobei die Datenbereinigung auf der Basis einer Bewertung des Auftretens von Werten in Speicherdaten in Bezug auf ein Merkmal von dem einen oder den mehreren ersten Merkmal(en), das den unabhängigen Variablen gemäß den Datenbereinigungsregeln entspricht, durchgeführt wird.

6. Verfahren (300) nach einem der vorhergehenden Ansprüche, wobei die Datenverarbeitungsregeln für eine Datenverbesserung eine Regel umfassen, die mit der Einstellung von Dateneinträgen für ein Merkmal von dem einen oder den mehreren ersten Merkmal(en) auf der Basis einer maximalen Anzahl von Kategorien von Dateneinträgen, die in gespeicherten Daten für das Merkmal einbezogen sind, zusammenhängt.

7. Verfahren (300) nach einem der vorhergehenden Ansprüche, ferner umfassend:
Ausführen (355) des Maschinenlernalgorithmus (130, 235) auf der Basis der Implementierung, des Ausgabedatensatzes und von Eingabedaten, die mit der Prozessszenario-Ausführung zusammenhängen, zum Erzeugen eines Vorhersagewerts;
Speichern (360) des Vorhersagewerts für die Prozessszenario-Ausführung und eines tatsächlichen Werts für die Prozessszenario-Ausführung, wobei der tatsächliche Wert auf der Basis einer tatsächlichen Ausführung des Prozessszenarios bei einem laufenden Dienst bestimmt wird, der eine Prozessszenarioinstanz implementiert und mit den Eingabedaten zusammenhängt, die zum Erzeugen des Vorhersagewerts verwendet werden; und
Neubewerten (365) der generischen Framework-Daten auf der Basis einer Bewertung von gespeicherten Vorhersagewerten und tatsächlichen Werten, wobei das Neubewerten der generischen Framework-Daten das Einstellen der Merkmale umfasst, die bei den generischen Framework-Daten festgelegt sind.

8. Nicht-flüchtiges computerlesbares Medium, das computerlesbare Anweisungen speichert, die durch einen Computer ausführbar sind und ausgebildet sind zum:
Zuordnen (320) von kundenspezifischen Daten (220) zu generischen Framework-Daten auf der Basis einer Identifizierung eines Arbeitsgegenstands oder mehrerer Arbeitsgegenstände, der/die in die kundenspezifischen Daten (220) und die generischen Framework-Daten einbezogen ist/sind, wobei die generischen Framework-Daten für einen generischen Workflow erzeugt werden, der mit einer Mehrzahl von Prozessszenarien zusammenhängt, die durch eine Mehrzahl von Diensten bereitgestellt werden;
auf der Basis des Zuordnens, Verbinden (325) der kundenspezifischen Daten (220) mit den generischen Framework-Daten zum Erzeugen eines Anfangsdatensatzes, der zum Vorhersagen einer oder mehrerer vorhersagbaren Variablen für ein Prozessszenario von der Mehrzahl von Prozessszenarien, die mit dem generischen Workflow zusammenhängen, bereitgestellt werden soll;
Festlegen (330) von einem oder mehreren ersten Merkmal(en) des Anfangsdatensatzes entsprechend unabhängigen Variablen für eine Maschinenlernvorhersage und von einem oder mehreren zweiten Merkmal(en) entsprechend der einen oder den mehreren vorhersagbaren Variablen für die Maschinenlernvorhersage;
Identifizieren (340) einer Eingabe zum Durchführen der Maschinenlernvorhersage für eine Prozessszenario-Ausführung, wobei die Eingabe den Anfangsdatensatz, eine Implementierung eines Maschinenlernalgorithmus (130, 235) und Datenverarbeitungsregeln für eine Datenverbesserung umfasst;
Durchführen (345) einer Dateneinstellung auf der Basis der Datenverarbeitungsregeln über dem Anfangsdatensatz zum Erzeugen eines Ausgabedatensatzes; und
Bereitstellen (350) des Ausgabedatensatzes zur Bewertung durch die Implementierung des Maschinenlernalgorithmus (130, 235) der Prozessszenario-Ausführung.

9. Computerlesbares Medium nach Anspruch 8, das ferner Anweisungen speichert, die ausgebildet sind zum:
Empfangen (305) von Workflowdaten für den generischen Workflow, wobei der generische Workflow in mehreren Prozessszenarien implementiert ist und wobei die Workflowdaten während der Ausführung von Instanzen von mehreren Prozessszenarien erzeugt werden; und
auf der Basis der empfangenen Workflowdaten, Festlegen (310) eines generischen Frameworks (160, 250) zum Einbeziehen von Daten für Merkmale des generischen Workflows und der einen oder mehreren vorhersagbaren Variablen des generischen Workflows, wobei die Merkmale auf der Basis der Workflowdaten bestimmt werden und ein Merkmal zum Identifizieren von Arbeitsgegenständen umfassen, die mit einer ausgeführten Instanz des generischen Workflows zusammenhängen, und
wobei es, vorzugsweise, ferner Anweisungen speichert, die ausgebildet sind zum:
Empfangen (315) von kundenspezifischen Daten (220), wobei die kundenspezifischen Daten (220) in Bezug auf Ausführungen eines ersten Prozessszenarios von der Mehrzahl von Prozessszenarien gespeichert sind, wobei die kundenspezifischen Daten (220) Daten für einen Arbeitsgegenstand oder mehrere Arbeitsgegenstände umfassen, die in den Daten des generischen Frameworks (160, 250) identifiziert worden sind.

10. Computerlesbares Medium nach Anspruch 8, wobei die Anweisungen zur Durchführung der Dateneinstellung über den Anfangsdatensatz Anweisungen umfassen, die ausgebildet sind zum:
Durchführen einer Datenbereinigung mit dem Anfangsdatensatz, wobei die Datenbereinigung auf einer Bewertung des Anfangsdatensatzes gemäß Datenbereinigungsregeln, die in die Datenverarbeitungsregeln einbezogen sind, zum Erzeugen eines bereinigten Datensatzes basiert; und
Bewerten von Merkmalen von dem bereinigten Datensatz gemäß eines Typs von Daten, die für ein Merkmal von den Merkmalen zum Erzeugen des Ausgabedatensatzes gespeichert sind, der zur Bewertung der Implementierung des Maschinenlernalgorithmus (130, 235) bereitgestellt werden soll, wobei der Ausgabedatensatz einen Satz von Merkmalen umfasst, die auf der Basis der Bewertung und einer Kombination der Merkmale von dem bereinigten Datensatz gemäß Datenerstellungsregeln für numerische und für kategorische Daten festgelegt werden, und
wobei, vorzugsweise, die Datenbereinigung auf der Basis einer Bewertung des Auftretens von Werten in Speicherdaten in Bezug auf ein Merkmal von dem einen oder den mehreren ersten Merkmal(en) entsprechend den unabhängigen Variablen gemäß den Datenbereinigungsregeln durchgeführt wird.

11. Computerlesbares Medium nach Anspruch 10, das ferner Anweisungen speichert, die ausgebildet sind zum:
Ausführen (355) des Maschinenlernalgorithmus (130, 235) auf der Basis der Implementierung, des Ausgabedatensatzes und von Eingabedaten, die mit der Prozessszenario-Ausführung zusammenhängen, zum Erzeugen eines Vorhersagewerts;
Speichern (360) des Vorhersagewerts für die Prozessszenario-Ausführung und eines tatsächlichen Werts für die Prozessszenario-Ausführung, wobei der tatsächliche Wert auf der Basis der tatsächlichen Ausführung des Prozessszenarios bei einem laufenden Dienst, der eine Prozessszenarioinstanz implementiert und der mit den Eingabedaten zur Erzeugung des Vorhersagewerts zusammenhängt, bestimmt wird; und
erneut Bewerten (365) der generischen Framework-Daten auf der Basis einer Bewertung von gespeicherten Vorhersagewerten und tatsächlichen Werten, wobei das Neubewerten der generischen Framework-Daten das Einstellen der Merkmale umfasst, die bei den generischen Framework-Daten festgelegt sind.

12. System (200, 400), umfassend:
eine Rechenvorrichtung (410); und
eine computerlesbare Speichervorrichtung (420, 430), die mit der Rechenvorrichtung (410) gekoppelt ist und auf der Anweisungen gespeichert sind, die, wenn sie durch die Rechenvorrichtung (410) ausgeführt werden, bewirken, dass die Rechenvorrichtung (410) Vorgänge ausführt, wobei die Vorgänge umfassen:
Zuordnen (320) von kundenspezifischen Daten (220) zu generischen Framework-Daten auf der Basis einer Identifizierung eines Arbeitsgegenstands oder mehrerer Arbeitsgegenstände, der/die in die kundenspezifischen Daten (220) und die generischen Framework-Daten einbezogen ist/sind, wobei die generischen Framework-Daten für einen generischen Workflow erzeugt werden, der mit einer Mehrzahl von Prozessszenarien zusammenhängt, die durch eine Mehrzahl von Diensten bereitgestellt werden;
auf der Basis des Zuordnens, Verbinden (325) der kundenspezifischen Daten (220) mit den generischen Framework-Daten zum Erzeugen eines Anfangsdatensatzes, der zum Vorhersagen von einer oder mehreren vorhersagbaren Variablen für ein Prozessszenario von der Mehrzahl von Prozessszenarien bereitgestellt werden soll, die mit dem generischen Workflow zusammenhängen;
Festlegen (330) von einem oder mehreren ersten Merkmal(en) des Anfangsdatensatzes, so dass es/sie unabhängigen Variablen für eine Maschinenlernvorhersage entspricht/entsprechen, und einem oder mehreren zweiten Merkmal(en), so dass es/sie der einen oder den mehreren vorhersagbaren Variablen für die Maschinenlernvorhersage entspricht/entsprechen;
Identifizieren (340) einer Eingabe zum Durchführen der Maschinenlernvorhersage für eine Prozessszenario-Ausführung, wobei die Eingabe den Anfangsdatensatz, eine Implementierung eines Maschinenlernalgorithmus (130, 235) und Datenverarbeitungsregeln zur Datenverbesserung umfasst;
Durchführen (345) einer Dateneinstellung auf der Basis der Datenverarbeitungsregeln über den Anfangsdatensatz zum Erzeugen eines Ausgabedatensatzes; und
Bereitstellen (350) des Ausgabedatensatzes zur Bewertung durch die Implementierung des Maschinenlernalgorithmus (130, 235) der Prozessszenario-Ausführung.

13. System (200, 400) nach Anspruch 12, wobei die computerlesbare Speichervorrichtung (420, 430) ferner Anweisungen umfasst, die, wenn sie durch die Rechenvorrichtung (410) ausgeführt werden, bewirken, dass die Rechenvorrichtung (410) Vorgänge ausführt, umfassend:
Empfangen (305) von Workflowdaten für den generischen Workflow, wobei der generische Workflow in mehreren Prozessszenarien implementiert wird, und wobei die Workflowdaten während der Ausführung von Instanzen von mehreren Prozessszenarien erzeugt werden; und
auf der Basis der empfangenen Workflowdaten, Festlegen (310) eines generischen Frameworks (160, 250) zum Einbeziehen von Daten für Merkmale des generischen Workflows und der einen oder mehreren vorhersagbaren Variablen des generischen Workflows, wobei die Merkmale auf der Basis der Workflowdaten bestimmt werden und ein Merkmal zum Identifizieren von Arbeitsgegenständen umfassen, die mit einer ausgeführten Instanz des generischen Workflows zusammenhängen.

14. System (200, 400) nach Anspruch 13, wobei die computerlesbare Speichervorrichtung (420, 430) ferner Anweisungen umfasst, die, wenn sie durch die Rechenvorrichtung (410) ausgeführt werden, bewirken, dass die Rechenvorrichtung (410) Vorgänge ausführt, umfassend:
Empfangen (315) von kundenspezifischen Daten (220), wobei die kundenspezifischen Daten (220) in Bezug auf Ausführungen eines ersten Prozessszenarios von der Mehrzahl von Prozessszenarien gespeichert sind, wobei die kundenspezifischen Daten (220) Daten für einen Arbeitsgegenstand oder mehrere Arbeitsgegenstände umfassen, die in den Daten des generischen Frameworks (160, 250) identifiziert werden.

15. System (200, 400) nach einem der vorhergehenden Ansprüche 12 bis 14, wobei die Anweisungen zur Ausführung der Dateneinstellung über den Anfangsdatensatz Anweisungen umfassen, die, wenn sie durch die Rechenvorrichtung (410) ausgeführt werden, bewirken, dass die Rechenvorrichtung (410) Vorgänge ausführt, umfassend:
Durchführen einer Datenbereinigung mit dem Anfangsdatensatz, wobei die Datenbereinigung auf einer Bewertung des Anfangsdatensatzes gemäß Datenbereinigungsregeln basiert, die in die Datenverarbeitungsregeln zum Erzeugen eines bereinigten Datensatzes einbezogen sind, wobei die Datenbereinigung auf der Basis einer Bewertung des Auftretens von Werten in Speicherdaten in Bezug auf ein Merkmal von dem einen oder den mehreren ersten Merkmalen durchgeführt wird, das den unabhängigen Variablen gemäß den Datenbereinigungsregeln entspricht; und
Bewerten von Merkmalen von dem bereinigten Datensatz gemäß eines Typs von Daten, die für ein Merkmal von den Merkmalen zum Erzeugen des Ausgabedatensatzes gespeichert sind, der zur Bewertung durch die Implementierung des Maschinenlernalgorithmus (130, 235) bereitgestellt werden soll, wobei der Ausgabedatensatz einen Satz von Merkmalen umfasst, die auf der Basis der Bewertung und einer Kombination der Merkmale von dem bereinigten Datensatz gemäß Datenerstellungsregeln für numerische und für kategorische Daten festgelegt werden, und
wobei die computerlesbare Speichervorrichtung vorzugsweise ferner Anweisungen umfasst, die, wenn sie durch die Rechenvorrichtung ausgeführt werden, bewirken, dass die Rechenvorrichtung Vorgänge durchführt, umfassend:
Ausführen (355) des Maschinenlernalgorithmus (130, 235) auf der Basis der Implementierung, des Ausgabedatensatzes und von Eingabedaten, die mit der Prozessszenario-Ausführung zusammenhängen, zum Erzeugen eines Vorhersagewerts;
Speichern (360) des Vorhersagewerts für die Prozessszenario-Ausführung und eines tatsächlichen Werts für die Prozessszenario-Ausführung, wobei der tatsächliche Wert auf der Basis der tatsächlichen Ausführung des Prozessszenarios bei einem laufenden Dienst bestimmt wird, der eine Prozessszenarioinstanz implementiert und mit den Eingabedaten zusammenhängt, die zum Erzeugen des Vorhersagewerts verwendet werden; und
Neubewerten (365) der generischen Framework-Daten auf der Basis einer Bewertung von gespeicherten Vorhersagewerten und tatsächlichen Werten, wobei das Neubewerten der generischen Framework-Daten das Einstellen der Merkmale umfasst, die bei den generischen Framework-Daten festgelegt sind.

## Revendications

1. Un procédé mis en œuvre par ordinateur (300) comprenant le fait de :
mettre en correspondance (*mapping*) (320) des données spécifiques au client (220) avec des données de cadre générique sur la base de l'identification d'un ou plusieurs éléments de travail inclus dans les données spécifiques au client (220) et les données de cadre générique, sachant que les données de cadre générique sont générées pour un flux de travail générique associé à une pluralité de scénarios de processus fournis par une pluralité de services ;
sur la base de la mise en correspondance, joindre (325) les données spécifiques au client (220) aux données de cadre générique afin de générer un ensemble de données initial à fournir pour prédire une ou plusieurs variables à prédire pour un scénario de processus parmi la pluralité de scénarios de processus associés au flux de travail générique ;
définir (330) une ou plusieurs premières caractéristiques de l'ensemble de données initial pour correspondre à des variables indépendantes pour une prédiction par apprentissage automatique, et une ou plusieurs deuxièmes caractéristiques pour correspondre à la ou aux variables à prédire pour la prédiction par apprentissage automatique ;
identifier (340) une entrée pour effectuer la prédiction par apprentissage automatique pour une exécution de scénario de processus, l'entrée incluant l'ensemble de données initial, une implémentation d'un algorithme d'apprentissage automatique (130, 235) et des règles de traitement de données pour l'amélioration des données ;
réaliser (345) un ajustement des données sur la base des règles de traitement de données sur l'ensemble de données initial afin de générer un ensemble de données de sortie ; et de
fournir (350) l'ensemble de données de sortie pour une évaluation par la mise en œuvre de l'algorithme d'apprentissage automatique (130, 235) de l'exécution du scénario de processus.

2. Le procédé (300) d'après la revendication 1, comprenant en outre le fait de :
recevoir (305) des données de flux de travail pour le flux de travail générique, sachant que le flux de travail générique est mis en œuvre dans plusieurs scénarios de processus, et sachant que les données de flux de travail sont générées pendant l'exécution d'instances de plusieurs scénarios de processus.

3. Le procédé (300) d'après la revendication 2, comprenant en outre le fait de :
sur la base des données de flux de travail reçues, définir (310) un cadre générique (160, 250) pour inclure des données pour des caractéristiques du flux de travail générique et la ou les variables à prédire du flux de travail générique, sachant que les caractéristiques sont déterminées sur la base des données de flux de travail et comprennent une caractéristique pour identifier des éléments de travail associés à une instance exécutée du flux de travail générique, et
sachant que, de préférence, le procédé comprend en outre le fait de :
recevoir (315) des données spécifiques au client (220), les données spécifiques au client (220) étant stockées en relation avec des exécutions d'un premier scénario de processus parmi la pluralité de scénarios de processus, sachant que les données spécifiques au client (220) incluent des données pour un ou plusieurs éléments de travail identifiés dans les données du cadre générique (160, 250).

4. Le procédé (300) d'après l'une quelconque des revendications précédentes, sachant que la réalisation de l'ajustement des données sur l'ensemble de données initial comprend le fait de :
réaliser un nettoyage des données sur l'ensemble de données initial, le nettoyage des données étant basé sur une évaluation de l'ensemble de données initial selon des règles de nettoyage des données incluses dans les règles de traitement de données afin de générer un ensemble de données nettoyé, et
sachant que, de préférence, la réalisation de l'ajustement des données comprend en outre le fait de :
évaluer des caractéristiques à partir de l'ensemble de données nettoyé selon un type de données stockées pour une caractéristique parmi les caractéristiques afin de générer l'ensemble de données de sortie à fournir pour évaluation par la mise en œuvre de l'algorithme d'apprentissage automatique (130, 235), sachant que l'ensemble de données de sortie inclut un ensemble de caractéristiques définies sur la base de l'évaluation et de la combinaison des caractéristiques provenant de l'ensemble de données nettoyé selon des règles de préparation des données pour des données numériques et catégorielles.

5. Le procédé (300) d'après la revendication 4, sachant que le nettoyage des données est réalisé sur la base d'une évaluation des occurrences de valeurs dans les données stockées par rapport à une caractéristique parmi la ou les premières caractéristiques correspondant aux variables indépendantes selon les règles de nettoyage des données.

6. Le procédé (300) d'après l'une quelconque des revendications précédentes, sachant que les règles de traitement de données pour l'amélioration des données comprennent une règle associée à l'ajustement des entrées de données pour une caractéristique parmi la ou les premières caractéristiques sur la base d'un nombre maximal de catégories d'entrées de données incluses dans les données stockées pour la caractéristique.

7. Le procédé (300) d'après l'une quelconque des revendications précédentes, comprenant en outre le fait de :
exécuter (355) l'algorithme d'apprentissage automatique (130, 235) sur la base de la mise en œuvre, de l'ensemble de données de sortie et des données d'entrée associées à l'exécution du scénario de processus, afin de générer une valeur de prédiction ;
stocker (360) la valeur de prédiction pour l'exécution du scénario de processus et une valeur réelle pour l'exécution du scénario de processus, sachant que la valeur réelle est déterminée sur la base de l'exécution réelle du scénario de processus au niveau d'un service en cours d'exécution mettant en œuvre une instance de scénario de processus et associée aux données d'entrée utilisées pour générer la valeur de prédiction ; et de
réévaluer (365) les données de cadre générique sur la base d'une évaluation de valeurs de prédiction stockées et de valeurs réelles, sachant que la réévaluation des données de cadre générique inclut l'ajustement des caractéristiques définies dans les données de cadre générique.

8. Un support non transitoire lisible par ordinateur stockant des instructions lisibles par ordinateur exécutables par un ordinateur et configuré pour :
mettre en correspondance *(mapping)* (320) des données spécifiques au client (220) avec des données de cadre générique sur la base de l'identification d'un ou plusieurs éléments de travail inclus dans les données spécifiques au client (220) et les données de cadre générique, sachant que les données de cadre générique sont générées pour un flux de travail générique associé à une pluralité de scénarios de processus fournis par une pluralité de services ;
sur la base de la mise en correspondance, joindre (325) les données spécifiques au client (220) aux données de cadre générique afin de générer un ensemble de données initial à fournir pour prédire une ou plusieurs variables à prédire pour un scénario de processus parmi la pluralité de scénarios de processus associés au flux de travail générique ;
définir (330) une ou plusieurs premières caractéristiques de l'ensemble de données initial pour correspondre à des variables indépendantes pour une prédiction par apprentissage automatique, et une ou plusieurs deuxièmes caractéristiques pour correspondre à la ou aux variables à prédire pour la prédiction par apprentissage automatique ;
identifier (340) une entrée pour effectuer la prédiction par apprentissage automatique pour une exécution de scénario de processus, l'entrée incluant l'ensemble de données initial, une implémentation d'un algorithme d'apprentissage automatique (130, 235) et des règles de traitement de données pour l'amélioration des données ;
réaliser (345) un ajustement des données sur la base des règles de traitement de données sur l'ensemble de données initial afin de générer un ensemble de données de sortie ; et pour
fournir (350) l'ensemble de données de sortie pour une évaluation par la mise en œuvre de l'algorithme d'apprentissage automatique (130, 235) de l'exécution du scénario de processus.

9. Le support lisible par ordinateur d'après la revendication 8, stockant en outre des instructions configurées pour :
recevoir (305) des données de flux de travail pour le flux de travail générique, sachant que le flux de travail générique est mis en œuvre dans plusieurs scénarios de processus, et sachant que les données de flux de travail sont générées pendant l'exécution d'instances de plusieurs scénarios de processus et pour
sur la base des données de flux de travail reçues, définir (310) un cadre générique (160, 250) pour inclure des données pour des caractéristiques du flux de travail générique et la ou les variables à prédire du flux de travail générique, sachant que les caractéristiques sont déterminées sur la base des données de flux de travail et comprennent une caractéristique pour identifier des éléments de travail associés à une instance exécutée du flux de travail générique, et
sachant que, de préférence, stockant en outre des instructions configurées pour :
recevoir (315) des données spécifiques au client (220), les données spécifiques au client (220) étant stockées en relation avec des exécutions d'un premier scénario de processus parmi la pluralité de scénarios de processus, sachant que les données spécifiques au client (220) incluent des données pour un ou plusieurs éléments de travail identifiés dans les données du cadre générique (160, 250).

10. Le support lisible par ordinateur d'après la revendication 8, sachant que les instructions pour effectuer l'ajustement des données sur l'ensemble de données initial comprennent des instructions configurées pour :
réaliser un nettoyage des données sur l'ensemble de données initial, le nettoyage des données étant basé sur une évaluation de l'ensemble de données initial selon des règles de nettoyage des données incluses dans les règles de traitement de données afin de générer un ensemble de données nettoyé, et pour
évaluer des caractéristiques à partir de l'ensemble de données nettoyé selon un type de données stockées pour une caractéristique parmi les caractéristiques afin de générer l'ensemble de données de sortie à fournir pour évaluation par la mise en œuvre de l'algorithme d'apprentissage automatique (130, 235), sachant que l'ensemble de données de sortie inclut un ensemble de caractéristiques définies sur la base de l'évaluation et de la combinaison des caractéristiques provenant de l'ensemble de données nettoyé selon des règles de préparation des données pour des données numériques et catégorielles, et
sachant que, de préférence, le nettoyage des données est réalisé sur la base d'une évaluation des occurrences de valeurs dans les données stockées par rapport à une caractéristique parmi la ou les premières caractéristiques correspondant aux variables indépendantes selon les règles de nettoyage des données.

11. Le support lisible par ordinateur d'après la revendication 10, stockant en outre des instructions configurées pour :
exécuter (355) l'algorithme d'apprentissage automatique (130, 235) sur la base de la mise en œuvre, de l'ensemble de données de sortie et des données d'entrée associées à l'exécution du scénario de processus, afin de générer une valeur de prédiction ;
stocker (360) la valeur de prédiction pour l'exécution du scénario de processus et une valeur réelle pour l'exécution du scénario de processus, sachant que la valeur réelle est déterminée sur la base de l'exécution réelle du scénario de processus au niveau d'un service en cours d'exécution mettant en œuvre une instance de scénario de processus, et associée aux données d'entrée utilisées pour générer la valeur de prédiction ; et pour
réévaluer (365) les données de cadre générique sur la base d'une évaluation de valeurs de prédiction stockées et de valeurs réelles, sachant que la réévaluation des données de cadre générique inclut l'ajustement des caractéristiques définies dans les données de cadre générique.

12. Un système (200, 400) comprenant :
un dispositif informatique (410) ; et
un dispositif de stockage lisible par ordinateur (420, 430) couplé au dispositif informatique (410) et portant des instructions stockées qui, lorsqu'elles sont exécutées par le dispositif informatique (410), amènent le dispositif informatique (410) à effectuer des opérations, les opérations comprenant le fait de :
mettre en correspondance (*mapping*) (320) des données spécifiques au client (220) avec des données de cadre générique sur la base de l'identification d'un ou plusieurs éléments de travail inclus dans les données spécifiques au client (220) et les données de cadre générique, sachant que les données de cadre générique sont générées pour un flux de travail générique associé à une pluralité de scénarios de processus fournis par une pluralité de services ;
sur la base de la mise en correspondance, joindre (325) les données spécifiques au client (220) aux données de cadre générique afin de générer un ensemble de données initial à fournir pour prédire une ou plusieurs variables à prédire pour un scénario de processus parmi la pluralité de scénarios de processus associés au flux de travail générique ;
définir (330) une ou plusieurs premières caractéristiques de l'ensemble de données initial pour correspondre à des variables indépendantes pour une prédiction par apprentissage automatique, et une ou plusieurs deuxièmes caractéristiques pour correspondre à la ou aux variables à prédire pour la prédiction par apprentissage automatique ;
identifier (340) une entrée pour effectuer la prédiction par apprentissage automatique pour une exécution de scénario de processus, l'entrée incluant l'ensemble de données initial, une implémentation d'un algorithme d'apprentissage automatique (130, 235) et des règles de traitement de données pour l'amélioration des données ;
réaliser (345) un ajustement des données sur la base des règles de traitement de données sur l'ensemble de données initial afin de générer un ensemble de données de sortie ; et de
fournir (350) l'ensemble de données de sortie pour une évaluation par la mise en œuvre de l'algorithme d'apprentissage automatique (130, 235) de l'exécution du scénario de processus.

13. Le système (200, 400) d'après la revendication 12, sachant que le dispositif de stockage lisible par ordinateur (420, 430) inclut des instructions supplémentaires qui, lorsqu'elles sont exécutées par le dispositif informatique (410), amènent le dispositif informatique (410) à effectuer des opérations comprenant le fait de :
recevoir (305) des données de flux de travail pour le flux de travail générique, sachant que le flux de travail générique est mis en œuvre dans plusieurs scénarios de processus, et sachant que les données de flux de travail sont générées pendant l'exécution d'instances de plusieurs scénarios de processus, et de
sur la base des données de flux de travail reçues, définir (310) un cadre générique (160, 250) pour inclure des données pour des caractéristiques du flux de travail générique et la ou les variables à prédire du flux de travail générique, sachant que les caractéristiques sont déterminées sur la base des données de flux de travail et comprennent une caractéristique pour identifier des éléments de travail associés à une instance exécutée du flux de travail générique.

14. Le système (200, 400) d'après la revendication 13, sachant que le dispositif de stockage lisible par ordinateur (420, 430) inclut des instructions supplémentaires qui, lorsqu'elles sont exécutées par le dispositif informatique (410), amènent le dispositif informatique (410) à effectuer des opérations comprenant le fait de :
recevoir (315) des données spécifiques au client (220), les données spécifiques au client (220) étant stockées en relation avec des exécutions d'un premier scénario de processus parmi la pluralité de scénarios de processus, sachant que les données spécifiques au client (220) incluent des données pour un ou plusieurs éléments de travail identifiés dans les données du cadre générique (160, 250).

15. Le système (200, 400) d'après l'une quelconque des revendications précédentes de 12 à 14, sachant que les instructions pour effectuer l'ajustement des données sur l'ensemble de données initial comprennent des instructions qui, lorsqu'elles sont exécutées par le dispositif informatique (410), amènent le dispositif informatique (410) à effectuer des opérations comprenant le fait de :
réaliser un nettoyage des données sur l'ensemble de données initial, le nettoyage des données étant basé sur une évaluation de l'ensemble de données initial selon des règles de nettoyage des données incluses dans les règles de traitement de données afin de générer un ensemble de données nettoyé, sachant que le nettoyage des données est réalisé sur la base d'une évaluation des occurrences de valeurs dans les données stockées par rapport à une caractéristique parmi la ou les premières caractéristiques correspondant aux variables indépendantes selon les règles de nettoyage des données, et de
évaluer des caractéristiques à partir de l'ensemble de données nettoyé selon un type de données stockées pour une caractéristique parmi les caractéristiques afin de générer l'ensemble de données de sortie à fournir pour évaluation par la mise en œuvre de l'algorithme d'apprentissage automatique (130, 235), sachant que l'ensemble de données de sortie inclut un ensemble de caractéristiques définies sur la base de l'évaluation et de la combinaison des caractéristiques provenant de l'ensemble de données nettoyé selon des règles de préparation des données pour des données numériques et catégorielles, et
sachant que, de préférence, le dispositif de stockage lisible par ordinateur inclut des instructions supplémentaires qui, lorsqu'elles sont exécutées par le dispositif informatique, amènent le dispositif informatique à effectuer des opérations comprenant le fait de :
exécuter (355) l'algorithme d'apprentissage automatique (130, 235) sur la base de la mise en œuvre, de l'ensemble de données de sortie et des données d'entrée associées à l'exécution du scénario de processus, afin de générer une valeur de prédiction ;
stocker (360) la valeur de prédiction pour l'exécution du scénario de processus et une valeur réelle pour l'exécution du scénario de processus, sachant que la valeur réelle est déterminée sur la base de l'exécution réelle du scénario de processus au niveau d'un service en cours d'exécution mettant en œuvre une instance de scénario de processus et associée aux données d'entrée utilisées pour générer la valeur de prédiction ; et de
réévaluer (365) les données de cadre générique sur la base d'une évaluation de valeurs de prédiction stockées et de valeurs réelles, sachant que la réévaluation des données de cadre générique inclut l'ajustement des caractéristiques définies dans les données de cadre générique.
